(19) Europäisches Patentamt
European Patent Office
Office européen des brevets

(11) EP 0 455 860 B1

(12) EUROPÄISCHE PATENTSCHRIFT

(45) Veröffentlichungstag und Bekanntmachung des Hinweises auf die Patenterteilung:
**27.08.1997 Patentblatt 1997/35**

(51) Int Cl.[6]: **C08J 3/12**, C08L 21/00, C08K 3/34, C08L 77/00

(21) Anmeldenummer: **90108897.1**

(22) Anmeldetag: **11.05.1990**

(54) **Rieselfähiges Kautschukgranulat als Schlagzähmodifizierungsmittel für Polyamid**

Free flowing rubber granules as impact modifier for polyamide

Granules de caoutchouc s'écoulant librement pour améliorer la résistance au choc du polyamide

(84) Benannte Vertragsstaaten:
**BE DE ES FR GB IT NL**

(43) Veröffentlichungstag der Anmeldung:
**13.11.1991 Patentblatt 1991/46**

(73) Patentinhaber: **BASF Aktiengesellschaft
67063 Ludwigshafen (DE)**

(72) Erfinder:
- **Goetz, Walter, Dr.
D-6700 Ludwigshafen (DE)**
- **Koch, Eckhard Michael, Dr.
D-6701 Fussgoenheim (DE)**
- **Gutsche, Herbert
D-6711 Beindersheim (DE)**
- **Pflueger, Richard
D-6700 Ludwigshafen (DE)**

(56) Entgegenhaltungen:
**EP-A- 0 047 374**
**US-A- 3 661 810**
**US-A- 4 431 765**
**US-A- 4 663 383**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 455 860 B1

Printed by Jouve, 75001 PARIS (FR)

## Beschreibung

Die Erfindung betrifft die Verwendung von Granulaten bestimmter thermoplastischer Elastomerer, welche mit einer geringen Menge eines (anorganischen) Mineral-Puders oder -Pulvers zur Herstellung der Rieselfähigkeit, insbesondere auch nach Lagerung in gepreßtem Zustand, beschichtet sind, zur Schlagzähigkeits-Verbesserung von Polyamid.

Thermoplastische Elastomere, z.B. säuremodifizierte Kautschuke, wie sie zur Verbesserung der Schlagzähigkeit von thermoplastischen Kunststoffen verwendet werden, sind von sich aus klebrig, d.h. sie backen - z. T. irreversibel - zusammen, was die Handhabung verständlicherweise sehr erschwert.

Es ist schon vorgeschlagen worden, solche Kautschuke mit handelsüblichen Mitteln zur Verbesserung der Rieselfähigkeit zu pudern. Solche Mittel enthalten meist oder bestehen aus Kieselsäure, d.h. Siliciumdioxid. Beschrieben ist dies z.B. in der EP-A-234 565.

Es wurden auch schon andere Mineralien, Salze und vergleichbare Stoffe zu diesem Zweck vorgeschlagen, u.a. Kaolin, Ton und Talkum (US-A-3 463 751).

Der letztgenannten US-Patentschrift ist zu entnehmen, daß alle diese Mittel in verhältnismäßig großer Menge (z. B. 25 % Kaolin) verwendet werden, wobei zu berücksichtigen ist, daß die in der Patentschrift betrachteten Kautschuke in feinteiliger Dispersion vorliegen. Für das Ausrüsten von Kautschuken, die zur Modifizierung von Thermoplasten dienen, ist der hohe Anteil an Mineralstoffen aber vielfach nicht tragbar, so daß die Aufgabe besteht, ein Mittel zur Puderung thermoplastischer Polymerer anzugeben, das in einer Menge von 0,5 % oder weniger, bezogen auf den Kautschuk, ausreichend wirkt.

Es wurde gefunden, daß feinteilige Silikate, nämlich Wollastonit, Kaolin oder Glimmer in ganz geringer Menge angewandt, eine völlig problemlose Rieselfähigkeit von Kautschuken bewirken.

Bei den erfindungsgemäß zu verwendenden Kautschuken handelt es sich um Copolymerisate, die reaktive Komponenten enthalten, welche eine Haftung mit den Amin- oder Carboxylendgruppen des Polyamids ermöglichen, nämlich olefinisch ungesättigte Carbonsäuren und deren Anhydride.

Solche Kautschuke werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall, "Toughened Plastics" (Applied Science Publishers, London, 1977) beschrieben.

Die erste Gruppe dieser Kautschuke sind die sogenannten Ethylen-Propylen (EPM) bzw. Ethylen-Propylen-Dien-(EPDM)-Kautschuke, die vorzugsweise ein Verhältnis von Ethylenresten zu Propylenresten im Bereich von 40:60 bis 90:10 aufweisen.

Die Mooney-Viskositäten (MLI+4/100°C) solcher unvernetzter EPM bzw. EPDM-Kautschuke (Gelgehalte im allgemeinen unter 1 Gew.%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexadien-1,5,5-Ethyliden-norbornen und Dicyclopentadien. Der Diengehalt der EPDM-Kautschuke beträgt vorzugsweise 0,5 bis 50, insbesondere 1 bis 8 Gew.%, bezogen auf das Gesamtgewicht des Kautschuks. Die EPM- bzw. EPDM-Kautschuke sind mit reaktiven Carbonsäuren oder deren Anhydriden gepfropft. Hier seien nur Acrylsäure, Methacrylsäure sowie Maleinsäureanhydrid genannt.

Die andere Gruppe der erfindungsgemäß zu verwendenden Kautschuke sind Copolymere des Ethylens mit Acrylsäure und/oder Methacrylsäure und/oder den Estern dieser Säuren. Zusätzlich können die Kautschuke noch Dicarbonsäuren, wie z.B. Maleinsäure und Fumarsäure bzw. Derivate dieser Säuren, wie z.B. Ester und Anhydride, und/oder Epoxy-Gruppen enthalten. Diese Dicarbonsäurederivate bzw. Epoxygruppen werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

$$R_1C(COOR_2)=C(COOR_3)R_4 \qquad (I)$$

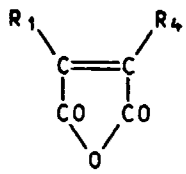

(II)

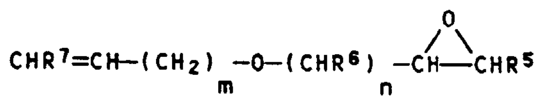

(III)

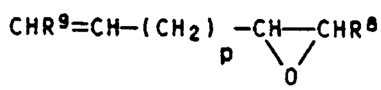

(IV)

wobei $R^1$ - $R^9$ Wasserstoff oder Alkylgruppen mit 1 bis 6 C-Atomen darstellen und m eine ganze Zahl von 0 bis 20, n eine ganze Zahl von 0 bis 10 und p eine ganze Zahl von 0 bis 5 ist.

Bevorzugt sind $R^1$ - $R^7$ Wasserstoff, und m hat den Wert 0 oder 1 und n ist 1. Die entsprechenden Verbindungen sind Maleinsäure, Fumarsäure, Maleinsäureanhydrid, Alkylglycidylether oder Vinylglycidylether.

Bevorzugte Verbindungen der Formeln I, II und III sind Maleinsäure, Maleinsäureanhydrid und Epoxygruppen-enthaltende Ester der Acrylsäure und/oder Methacrylsäure, wobei Glycidylacrylat und Glycidylmethacrylat besonders bevorzugt werden.

Der Ethylengehalt der Copolymeren liegt im allgemeinen im Bereich von 50 bis 98 Gew.%, der Anteil an Epoxygruppen enthaltenden Monomeren und der Anteil des Acrylsäure- und/oder Methacrylsäureesters jeweils im Bereich von 1 bis 49 Gew.%.

Besonders bevorzugt sind Copolymerisate aus

| | |
|---|---|
| 50 bis 98, | insbesondere 60 bis 95 Gew.% Ethylen, |
| 0,5 bis 40, | insbesondere 3 bis 20 Gew.% Glycidylacrylat und/oder Glycidylmethacrylat, sowie Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur. Entsprechende Verfahren sind in der Literatur beschrieben.

Der Schmelzindex der Ethylencopolymeren liegt im allgemeinen im Bereich von 1 bis 80 g/10 min (gemessen bei 190°C und 2,16 kg Belastung).

Erfindungsgemäß zu verwendende Kautschukgranulate weisen z.B. eine Korngröße von i.a. 1 bis 20 mm, bevorzugt 3 bis 10 mm auf.

Die angewandte Menge an Puderungsmittel beträgt 0,005 bis 0,2 Gew.%, insbesondere 0,02 bis 0,005 Gew.%, bezogen auf Kautschuk.

Die Erfindung ist deshalb überraschend, weil an sich übliche andere Puderungsmittel, z.B. auf der Grundlage von Calciumverbindungen, auch in höherer Menge angewandt, bedeutend schwächer wirken oder unwirksam sind.

Beispiel

Je 1 kg eines handelsüblichen Kautschuks (Exxelor VA 1801 der EXXON Chemicals) wird mit 250 mg Mineral gepudert und in einem Kunststoffbeutel unter einem 10 kg schweren Gewicht für eine Woche gelagert. Anschließend wird der Beutel längs aufgeschnitten, umgedreht und der Anteil des aus dem Beutel rieselnden Granulats in Verhältnis zur Gesamtmenge an Kautschukgranulat bestimmt.

| Mineral | erhältlich als (Handelsname) | Hersteller bzw. Lieferant | % herausrieselnde Granulat |
|---|---|---|---|
| Wollastonit | Wicroll 10 | Omya, Finnland | 100 |
| Kaolin | Polarite 102 A | English China Clay Inc. | 100 |
| Glimmer | Micalink | CMMP, Frankreich | 100 |
| | | | |
| Vergleich | | | |
| Calciumsulfat | | | 11 |
| Calciumcarbonat | | | 19 |
| keine Puderung | | | 0 |

## Patentansprüche

1. Verwendung eines Granulats eines thermoplastischen Elastomeren aus der Gruppe der EPM-, EPDM- und gegebenenfalls acrylestermodifizierten Ethylenpolymeren, welche durch Einbau einer ungesättigten Carbonsäure oder deren Anhydrid modifiziert sind, zur Schlagzähigkeitsverbesserung von Polyamid, wobei das Granulat zur Verbesserung der Rieselfähigkeit oberflächlich aufgebracht ein feinteiliges mineralisches Silikat aus der Gruppe, die Wollastonit, Kaolinit und Glimmer umfaßt, in einer Menge von 0.005 bis 0.2 Gew.-%, bezogen auf das Elastomere, enthält.

## Claims

1. The use of granules of a thermoplastic elastomer from the group consisting of EPM, EPDM and unmodified or acrylate-modified ethylene polymers which have been modified by incorporation of an unsaturated carboxylic acid or an anhydride thereof, for the impact modification of polyamide, where the granules have a surface coating of a finely divided mineral silicate from the group consisting of wollastonite, kaolinite and mica in an amount of from 0.005 to 0.2% by weight, based on the elastomer, for improving the flow properties.

## Revendications

1. Utilisation d'un granulat d'un élastomère thermoplastique choisi parmi le groupe comprenant les polymères EPM, EPDM et éventuellement des polymères d'éthylène modifiés par un ester acrylique, qui ont été modifiés par incorporation d'un acide carboxylique insaturé ou de son anhydride, pour l'amélioration de la résistance aux chocs du polyamide, dans laquelle le granulat utilisé pour améliorer l'aptitude à l'écoulement contient un silicate minéral à grains fins choisi parmi le groupe qui comprend la wollastonite, la kaolinite et le mica, appliqué sur sa surface en une quantité de 0,05 à 0,2% en poids rapporté à l'élastomère.